# EUROPEAN PATENT SPECIFICATION

(11) **EP 3 766 394 B1**
(45) Date of publication and mention of the grant of the patent: **11.12.2024**
(21) Application number: 19187298.5
(22) Date of filing: 19.07.2019
(51) Int. Cl.: A47J 43/07

(54) **CONTAINER FOR A KITCHEN APPLIANCE**
BEHÄLTER FÜR EIN KÜCHENGERÄT
RÉCIPIENT DESTINÉ À UN APPAREIL DE CUISINE

(43) Date of publication of application: 20.01.2021
(73) Proprietor: BSH Hausgeräte GmbH, 81739 München (DE)
(72) Inventor: Krüger, Tobias, 80639 München (DE); Leng, Sascha, 80339 München (DE); Bürzle, Sonja, 89257 Illertissen (DE); Krivec, Luka, 3331 Nazarje (SI); Brecko, Ales, 3000 Celje (SI)

(56) References cited:
- EP-A1- 2 404 536
- WO-A1-03/001954
- US-A1- 2014 151 479
- US-B2- 7 918 601
- US-B2- 9 370 280

## Description

### Background of the invention

The present invention relates to a kitchen appliance, more particularly to a container for a kitchen appliance and a kitchen appliance comprising such a container.

### State of the Art

In conventional kitchen appliances for processing food such as blenders, compact food processors, juicers, stand mixers, choppers, hand blenders which include a container, it is known to modify the geometries of the container to disrupt (break) the laminar flow of the foodstuff (i.e. introducing turbulence and swirling effect) during the processing operation. Such disruption improves the process and results in a more uniform mixing, blending or chopping of the food. Such modifications to the geometry of the container include inward protrusions, such as ribs, ridges and the like.

WO 03/001954 A1 discloses a container for a kitchen appliance having straight flow affecting means.

However, many of these protrusions or in general term flow affecting means don't provide for a satisfactory processing of the food. They are either too small, too big or of improper geometric design. Consequently, the food is not processed well and/or cleaning of the container is not convenient and effective. Last but not least, the appearance of the container is not too appealing.

### Problem to be solved

It is an object of the present invention to overcome the above-mentioned shortcomings of the prior art and to improve functionality and usability of a container for a kitchen appliance or the kitchen appliance in general. Thereby, the ornamental appearance of the container should also be improved.

### Solution according to the invention

The object is achieved by a container according to the features of claim 1. Advantageous embodiments that can be implemented by themselves or in combination are described in dependent claims.

The invention relates to a container for a kitchen appliance comprising:
- a food processing tool,
- a wall and
- a bottom,

wherein the wall and the bottom comprise flow affecting means, wherein the flow affecting means of the wall and the flow affecting means of the bottom are configured to communicate so that both flow affecting means follow an extension line comprising a bottom part and a wall part and running from a central portion of the bottom up the wall of the container,
wherein the flow affecting means are formed as a protrusion,
characterized in that the bottom part of the extension line runs in a substantially curved manner, wherein the wall part of the extension line runs in a substantially curved manner.

The extension line is a continuous bent line.

The flow affecting means of the wall and the flow affecting means of the bottom following the extension line are preferably not in contact. They are in communication so as to follow the extension line running from the central portion of the bottom up the wall of the container. The extension line includes the bottom part and the wall part.

The container according to the invention provides the following advantages:
- improved food processing (mixing, chopping, blending, crushing) in comparison to existing containers due to flow affecting means on the bottom and the wall of the container
- improved appearance of the container
- moreover, users get the visual impression that the food is really processed effectively as they can observe it by themselves.

### Embodiments of the invention

According to one embodiment not forming part of the invention, the bottom part of the extension line runs in a substantially straight manner. This means the bottom flow affecting means adopts this form by following it.

The effect is that this affecting means is easier to manufacture as its form is rather basic without compromising the function.

Specifically, the wall part of the extension line runs in a substantially straight manner. This means the wall flow affecting means adopts this form by following it. The effect is that this flow affecting means is easier to manufacture as its form is rather basic without compromising the function.

According to the invention, the bottom part of the extension line runs in a substantially curved manner. For the sake of clarity in this application curved actually means curvilinear. This curve is formed spirally or logarithmically. Due to this form aesthetic function of the container is improved. Hence, functionality and appearance work hand in hand.

According to the invention, the wall part of the extension line runs in a substantially curved manner. The same principles apply as for the bottom part of the extension line. Also in this case the curve is formed spirally or logarithmically. Due to the form aesthetic function of the container is improved. Hence, functionality and appearance work hand in hand.

Preferably, the flow affecting means extends from the bottom portion to the top portion of the wall. The bottom portion runs from the bottom of the container to a certain height above the bottom. The top portion runs from the top edge of the container to a certain height below the edge. In this manner, substantial surface of the wall is used for affecting flow of the processed foodstuff thereby increasing the efficiency.

Advantageously, the flow affecting means extends from the central portion to the peripheral portion of the bottom. The central portion runs essentially from the centre of the bottom of the container to a certain radius from the centre. The peripheral portion runs from the outermost area where the bottom and the wall of the container intersect to a certain radius in the direction to the centre. In this way, substantial surface of the bottom is used for affecting flow of the processed foodstuff thereby increasing the efficiency.

In fact any combinations of arrangement of flow affecting means are possible. The most preferred one is with curved bottom and curved wall affecting means, running from the central portion to the peripheral portion of the bottom and from the bottom portion to the top portion of the wall. It turns out this embodiment is the most effective as far as flow affecting (flow breaking) is concerned. Moreover, the appearance of the container that follows and is based on functionality (geometry) is improved.

In an advantageous solution, the flow affecting means is arranged on the inner surface of the container. This is where rotation (flow) of the processed food inside of the container, more specifically on the bottom and the wall thereof takes place.

According to one preferred embodiment, the bottom of the container forms a holding means for the food processing tool. The bottom of the container can serve as the holding means for holding the food processing tool, i.e. knife with blades. Typically, the knife comprises 4 or 6 blades.

Advantageously, the holding means is configured to be detachable. This means it can be cleaned more easily.

In a preferred embodiment, the flow affecting means is formed as a protrusion protruding from the bottom of the container and from the inner surface of its wall. The protrusion can take a form of a rib, ridge or the like. Preferably, the protrusion is triangular in cross-section. However, other forms as rectangular, square are possible as well.

Specifically, an angle (α) of the protrusion to the surface of the wall and/or to the surface of the bottom is 15-120°, more preferably 30-90°. The angle defines a rate or efficiency of disrupting the flow of the processed food. It should not be too small in order to preserve good cleaning properties.

The number of protrusions is optional. Protrusions bring about turbulence pulses in the rotational flow of the processed foodstuff. However, higher number doesn't necessarily mean better processing. Optimal number is chosen experimentally or based on experience.

According to one embodiment, the container is made of glass material. Glass as material is still perceived by the users as a high grade material. It's food-grade, in other words food-safe.

Moreover, it has several advantages in terms of appearance.

In an advantageous solution, the container is made of plastic material. Plastic material is ubiquitous and therefore cheap. Some of plastic materials can have very good food-grade and mechanical properties (e.g. Tritan).

The horizontal cross-section of the container can be circular or rectangular (square). The preferred option is circular as it proves to be more useful.

A second aspect of the invention is a kitchen appliance comprising the container according to claim 1 and the dependent claims.

### Brief description of the figures

Fig. 1 is a side view of a kitchen appliance (blender)
Fig. 2 is a isometric view of the container with straight extension line
Fig. 3 is a isometric view of the container with curved extension line
Fig. 4 is a section view of the container with angle of protrusion

### Detailed description

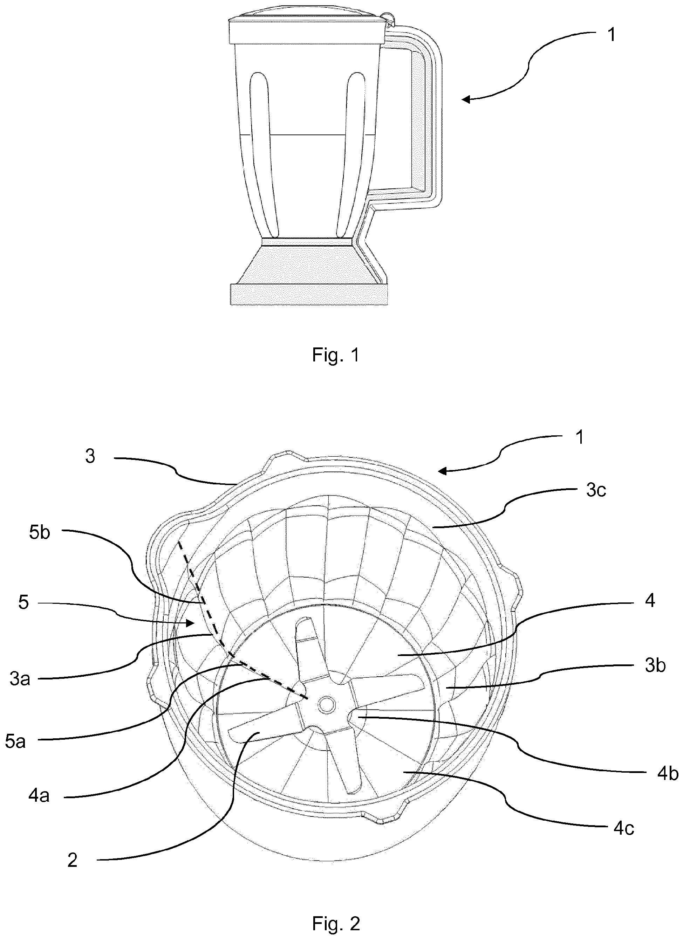

Fig. 1 depicts a container of a kitchen appliance of prior art, more specifically a blender.

The container 1 is covered by a lid and equipped with a handle. A bottom part of the container 1 comprises a clutch that can be coupled to an output shaft of an electrical motor which is arranged in a blender base (not shown). As seen from the figure, the container wall is provided with two flow affecting means (flow breakers).

Fig. 2 shows the container 1 according to one embodiment not forming part of the invention. The extension line 5 which is shown as a broken line begins in the central portion 4b of the container bottom 4. It then extends to the peripheral portion 4c of the container bottom 4 in a substantially straight manner. This is the bottom part 5a of the extension line 5 and is generally parallel to the bottom 4. At the end of the peripheral portion 4c of the bottom 4 where the wall 3 begins to rise in its bottom portion 3b from the bottom 4 of the container 1 in an essentially perpendicular manner the extension line 5 bends at nearly the right angle and continues on the container wall 3. This is the wall part 5b of the extension line 5 also extending in a substantially straight manner and ending in the top portion 3c of the wall 3 near the edge of the container 1 and being generally parallel to the wall 3. Hence, the extension line 5 is a bent line, i.e. a polyline. The flow affecting means 4a (flow breaker) of the bottom 4 follows the bottom part 5a of the extension line 5 whereas the flow affecting means 3a (flow breaker) of the wall 3 follows the wall part 5b of the extension line 5. In this case the flow affecting means 3a of the wall 3 immediately follows the flow affecting means 4a of the bottom 4 of the container 1. The cross-section of the container 1 is circular.

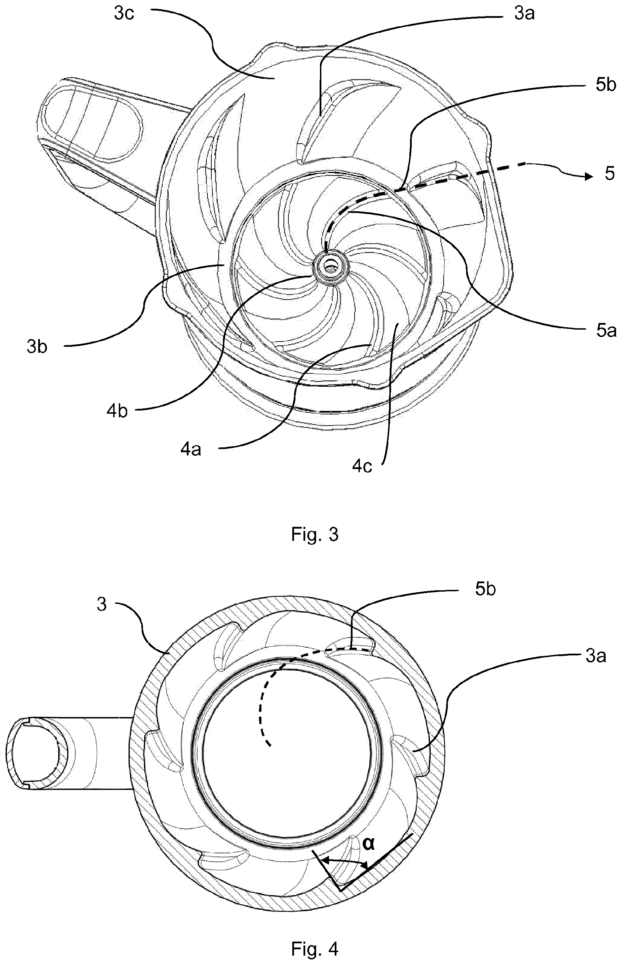

Fig. 3 depicts the container 1 according to the invention. Again, the extension line 5 which is shown as a broken line begins in the central portion 4b of the container bottom 4. It then extends to the peripheral portion 4c of the container bottom 4 in a substantially curved manner. The curve is of a spiral form. This is the bottom part 5a of the extension line 5 and is generally parallel to the bottom 4. At the end of the peripheral portion 4c of the bottom 4 where the wall 3 begins to rise in its bottom portion 3b from the bottom 4 of the container 1 in an essentially perpendicular manner the extension line 5 bends at nearly the right angle and continues on the container wall 3. This is the wall part 5b of the extension line 5 ending in the top portion 3c of the wall 3 near the edge of the container 1 and being generally parallel to the wall 3. Hence, the extension line 5 is a bent line, i.e. polyline. The flow affecting means 4a (flow breaker) of the bottom 4 follows the bottom part 5a of the extension line 5 whereas the flow affecting means 3a (flow breaker) of the wall 3 follows the wall part 5b of the extension line 5. Because the view of the container 1 is isometric it seems like the wall part 5b of the extension line 5 is straight. However, as it can be seen in the section view of Fig. 4 this doesn't hold true. The wall part 5b of the extension line 5 is also curved. The curve is of a spiral form. The bottom part 5a and the wall part 5b of the extension line 5 form a continuous curved line. In this case the flow affecting means 3a of the wall 3 doesn't immediately follow the flow affecting means 4a of the bottom 4 but begins at some height from the bottom 4 of the container 1.

Fig. 4 depicts a top view of a horizontal cross-section of the wall 3 of the container 1 of the embodiment according to Fig. 3. As it can be seen, also the wall part 5b of the extension line 5 extends in a curved manner. The food processing tool, for instance a knife with blades of Fig. 2, rotates in a clockwise direction. Upon contact with the flow affecting means 3a (flow breaker) the flow is disrupted. This brings about turbulence and swirling thereof and improves blending. The cross-section of the container 1 is circular.

### Reference signs list

1 container
2 food processing tool
3 wall
3a flow affecting means of a wall
3b bottom portion
3c top portion
4a flow affecting means of a bottom
4b central portion
4c peripheral portion
5 extension line
5a bottom part of extension line
5b wall part of extension line
α angle of protrusion

## Claims

1. A container (1) for a kitchen appliance comprising:
- a food processing tool (2),
- a wall (3) and
- a bottom (4),
wherein the wall (3) and the bottom (4) comprise flow affecting means (3a, 4a), wherein the flow affecting means (3a) of the wall (3) and the flow affecting means (4a) of the bottom (4) are configured to communicate so that both flow affecting means (3a, 4a) follow an extension line (5) comprising a bottom part (5a) and a wall part (5b) and running from a central portion (4b) of the bottom (4) up the wall (3) of the container (1), wherein the flow affecting means (4a) is formed as a protrusion,
**characterised in that**
the bottom part (5a) of the extension line (5) runs in a substantially curved manner, wherein the wall part (5b) of the extension line (5) runs in a substantially curved manner.

2. Container (1) according to any of the preceding claims, wherein the flow affecting means (3a) extends from the bottom portion (3b) to the top portion (3c) of the wall (3).

3. Container (1) according to any of the preceding claims, wherein the flow affecting means (3a) is arranged on the inner surface of the container (1).

4. Container (1) according to any of the preceding claims, wherein the bottom (4) of the container (1) forms a holding means for the food processing tool (2).

5. Container (1) according to claim 4, wherein the holding means is configured to be detachable.

6. Container according to claim 5, wherein an angle (α) of the protrusion to the surface of the wall (3) and/or the surface of the bottom (4) is 15-120°.

7. Container according to claim 6, wherein the angle (α) is preferably 30-90°.

8. Container (1) according to any of the preceding claims, wherein the container (1) is made of glass material.

9. Container (1) according to any of claims 1-7, wherein the container (1) is made of plastic material.

10. Kitchen appliance comprising the container (1) according to any of the preceding claims.

## Patentansprüche

1. Behälter (1) für ein Küchengerät, der Folgendes umfasst:
- ein Lebensmittelverarbeitungswerkzeug (2),
- eine Wand (3) und
- einen Boden (4),
wobei die Wand (3) und der Boden (4) strömungsbeeinflussende Mittel (3a, 4a) umfassen, wobei die strömungsbeeinflussenden Mittel (3a) an der Wand (3) und die strömungsbeeinflussenden Mittel (4a) am Boden (4) so ausgelegt sind, dass sie miteinander in Verbindung stehen, so dass beide strömungsbeeinflussenden Mittel (3a, 4a) einer Verlängerungslinie (5) mit einem Bodenteil (5a) und einem Wandteil (5b) folgen, die von einem mittleren Abschnitt (4b) des Bodens (4) aus die Wand (3) des Behälters (1) hoch verläuft,
wobei das strömungsbeeinflussende Mittel (4a) als Vorsprung ausgebildet ist,
**dadurch gekennzeichnet, dass**
der Bodenteil (5a) der Verlängerungslinie (5) im Wesentlichen gekrümmt verläuft, wobei der Wandteil (5b) der Verlängerungslinie (5) im Wesentlichen gekrümmt verläuft.

2. Behälter (1) nach einem der vorhergehenden Ansprüche, wobei das strömungsbeeinflussende Mittel (3a) vom Bodenabschnitt (3b) bis zum oberen Abschnitt (3c) der Wand (3) verläuft.

3. Behälter (1) nach einem der vorhergehenden Ansprüche, wobei das strömungsbeeinflussende Mittel (3a) an der Innenfläche des Behälters (1) angeordnet ist.

4. Behälter (1) nach einem der vorhergehenden Ansprüche, wobei der Boden (4) des Behälters (1) ein Haltemittel für das Lebensmittelverarbeitungswerkzeug (2) bildet.

5. Behälter (1) nach Anspruch 4, wobei das Haltemittel so ausgelegt ist, dass es sich abnehmen lässt.

6. Behälter nach Anspruch 5, wobei ein Winkel (α) des Vorsprungs zur Oberfläche der Wand (3) und/oder des Bodens (4) 15-120° beträgt.

7. Behälter nach Anspruch 6, wobei der Winkel (α) vorzugsweise 30-90° beträgt.

8. Behälter (1) nach einem der vorhergehenden Ansprüche, wobei der Behälter (1) aus Glasmaterial hergestellt ist.

9. Behälter (1) nach einem der Ansprüche 1-7, wobei der Behälter (1) aus Kunststoffmaterial hergestellt ist.

10. Küchengerät mit dem Behälter (1) nach einem der vorhergehenden Ansprüche.

## Revendications

1. Récipient (1) pour un appareil de cuisine comprenant :
- un outil de transformation des aliments (2),
- une paroi (3), et
- un fond (4),
dans lequel la paroi (3) et le fond (4) comprennent des moyens affectant le débit (3a, 4a), dans lequel les moyens affectant le débit (3a) de la paroi (3) et les moyens affectant le débit (4a) du fond (4) sont configurés afin de communiquer de sorte que les deux moyens affectant le débit (3a, 4a) suivent une ligne d'extension (5) comprenant une partie de fond (5a) et une partie de paroi (5b) et s'étendant d'une partie centrale (4b) du fond (4) jusqu'à la paroi (3) du récipient (1),
dans lequel les moyens affectant le débit (4a) sont formés comme une protrusion,
**caractérisé en ce que**
la partie inférieure (5a) de la ligne d'extension (5) s'étend d'une manière sensiblement incurvée, dans lequel la partie de paroi (5b) de la ligne d'extension (5) s'étend d'une manière sensiblement incurvée.

2. Récipient (1) selon l'une quelconque des revendications précédentes, dans lequel les moyens affectant le débit (3a) s'étendent de la partie inférieure (3b) à la partie supérieure (3c) de la paroi (3).

3. Récipient (1) selon l'une quelconque des revendications précédentes, dans lequel les moyens affectant le débit (3a) sont agencés sur la surface interne du récipient (1).

4. Récipient (1) selon l'une quelconque des revendications précédentes, dans lequel le fond (4) du récipient (1) forme un moyen de maintien pour l'outil de transformation des aliments (2).

5. Récipient (1) selon la revendication 4, dans lequel le moyen de maintien est configuré afin d'être détachable.

6. Récipient (1) selon la revendication 5, dans lequel un angle (α) de la protrusion à la surface de la paroi (3) et/ou la surface du fond (4) est de 15 à 120°.

7. Récipient (1) selon la revendication 6, dans lequel l'angle (α) est de préférence de 30 à 90°.

8. Récipient (1) selon l'une quelconque des revendications précédentes, dans lequel le récipient (1) est constitué de matériau en verre.

9. Récipient (1) selon l'une quelconque des revendications 1 à 7, dans lequel le récipient (1) est constitué de matière plastique.

10. Appareil de cuisine comprenant le récipient (1) selon l'une quelconque des revendications précédentes.
